# EUROPÄISCHE PATENTSCHRIFT

(11) **EP 3 122 602 B1**
(45) Veröffentlichungstag und Bekanntmachung des Hinweises auf die Patenterteilung: **16.05.2018**
(21) Anmeldenummer: 15711163.4
(22) Anmeldetag: 20.03.2015
(51) Int. Cl.: B60R 22/20, B60R 22/18

(54) **FAHRZEUGSITZ**
VEHICLE SEAT
SIÈGE DE VÉHICULE

(30) Priorität: 27.03.2014 DE 102014205717; 26.09.2014 DE 102014219568
(43) Veröffentlichungstag der Anmeldung: 01.02.2017
(73) Patentinhaber: Adient Luxembourg Holding S.à r.l., 1855 Luxembourg (LU)
(72) Erfinder: DIEHL, Andreas, 67697 Otterberg (DE); WAGNER, Michael, 66386 St. Ingbert (DE); SCHNEIDER, Henning, 67752 Wolfstein (DE); BURR, Andrea, 66894 Langwieden (DE); RAUDONAT, Karsten, 67663 Kaiserslautern (DE)
(74) Vertreter: Liedhegener, Ralf
(86) Internationale Anmeldenummer: PCT/EP2015/055876
(87) Internationale Veröffentlichungsnummer: WO 2015/144573

(56) Entgegenhaltungen:
- DE-A1-102006 060 370
- DE-U1- 9 102 217
- DE-U1-202010 012 472
- US-A- 5 566 978

## Beschreibung

Die Erfindung betrifft eine Vorrichtung zur Führung und/oder Umlenkung eines Sicherheitsgurtes gemäß den Merkmalen des Oberbegriffs des Anspruchs 1 sowie einen Fahrzeugsitz mit den Merkmalen des Oberbegriffs des Anspruchs 15.

### Stand der Technik

Aus der EP 1 838 561 B1 ist ein gattungsgemäßer Fahrzeugsitz bekannt, welcher einen integrierten Sicherheitsgurt und einen Umlenker zur Höheneinstellung des Sicherheitsgurts aufweist. Der Gurtverankerungspunkt, welcher als oberer Haltepunkt bezeichnet ist, ist dabei von der eingestellten Höhe des Umlenkers abhängig. Im Crashfall müssen die bewegten Teile des Umlenkers die von dem Sicherheitsgurt eingebrachte Last aufnehmen. Entsprechend robust ist der Umlenker auszuführen.

Aus der DE 10 2006 060 370 A1 ist ein Fahrzeugsitz mit einem Sicherheitsgurt in der Form eines integrierten Dreipunktgurtes bekannt, der einen oberen Umlenker aufweist und ein Austrittselement umfasst, durch das der Sicherheitsgurt aus dem Fahrzeugsitz austritt.

Aus der DE 91 02 217 U1, gemäß den Oberbegriff des Patantanspruchs 1, ist eine Rückhaltesystem für einen Fahrzeugsitz mit einem Sicherheitsgurt bekannt. Dieses weist einen Gurtaustrittsschlitz auf, der um eine horizontal verlaufende Drehachse senkrecht zur Fläche der Rückenlehne verstellbar ist. Hierzu weist das Austrittselement eine Verzahnung im Sperrbereich auf. Diese Verzahnung rotiert mit der Austrittsöffnung mit. Ein erster Sperrbereich, der im Umfangsbereich eines Umlenkkörpers angeordnet ist, greift im Sperrzustand in eine Verzahnung eines zweiten Sperrbereichs ein, der fest in einem Verschiebeträger angeordnet ist. Um diesen Formschluss zu lösen, wird ein Lagerbolzen gegen eine Feder nach oben bewegt. Nach einer Verdrehung in die gewünschte Winkelposition wird die Gegenkraft von der Feder weggenommen und die beiden Verzahnungen greifen wieder formschlüssig ineinander.

Aus der US 5 566 978 A ist ein Fahrzeuginsassen-Rückhaltesystem mit einem Gurtstraffer und fahrzeugsensitiven Sensoren, die eine Unfallsituation detektieren können, bekannt. Weiterhin sind Sensoren, die die körperliche Konstitution eines Fahrzeuginsassen und die Sitzposition eines Fahrzeuginsassen ermitteln, vorgesehen. Aufgrund der Daten der letztgenannten Sensoren wird ein höhenverstellbarer Anschlag für einen Gurtumlenkbeschlag eingestellt, bis zu dem sich der Umlenkbeschlag im Fall der Aktivierung des Gurtstraffers bewegen kann.

### Aufgabe

Der Erfindung liegt die Aufgabe zu Grunde, eine Vorrichtung zur Führung und/oder Umlenkung eines Sicherheitsgurtes sowie einen Fahrzeugsitz der eingangs genannten Art zu verbessern.

### Lösung

Diese Aufgabe wird erfindungsgemäß durch eine Vorrichtung mit den Merkmalen des Anspruchs 1 gelöst. Vorteilhafte Ausgestaltungen, welche einzeln oder in Kombination miteinander eingesetzt werden können, sind Gegenstand der Unteransprüche.

Eine gattungsgemäße Vorrichtung zur Führung und/oder Umlenkung eines Sicherheitsgurtes weist eine Umlenkeinheit auf, wobei die Umlenkeinheit wiederum einen Halteabschnitt sowie eine Führungsabschnitt aufweist. Insbesondere handelt es sich um eine Vorrichtung zur Führung und/oder Umlenkung um einen oberen Gurtumlenkpunkt eines Sicherheitsgurtes. Die Umlenkeinheit ist mittels des Halteabschnitts mit einem Lehnenrahmen eines Fahrzeugsitzes oder mit einem Rahmen eines Fahrzeugs fest verbindbar. Ferner ist es vorgesehen, dass der Sicherheitsgurt über die Umlenkeinheit führbar ist. Die Vorrichtung weist ferner ein Führungselement und/oder ein Verstellelement auf, welches jeweils dazu eingerichtet ist, eine Höheneinstellung eines obersten Gurtumlenkpunktes des Sicherheitsgurtes, insbesondere in Relation zur Umlenkeinheit, einzustellen und zu sichern. Ebenso ist das Verstellelement dazu eingerichtet, bei Überschreitung einer vorgegebenen Zugbelastung auf den und/oder durch den Sicherheitsgurt, insbesondere in einem Crashfall, die Höheneinstellung des obersten Gurtumlenkpunktes freizugeben.

Erfindungsgemäß sieht die Vorrichtung vor, dass das Verstellelement mit einer Gurtblende zusammenwirkend ausgebildet ist.

Die Vorrichtung sieht es vor, im Crashfall oder in einer anderen Situation, in welcher der Sicherheitsgurt bestimmungsgemäß eine Belastungskraft in den Rahmen, beispielsweise eines Fahrzeugsitzes, einleiten soll, den aus Gründen des Komforts eingestellten höchsten Gurtumlenkpunkt freizugeben und einen zwecks Krafteinleitung geeigneteren Gurtverankerungspunkt, bzw. einen effektiven Gurtverankerungspunkt, welcher in dieser Situation lasttragend ist, nutzbar zu machen.

Dadurch kann in einer Crashsituation der Verlauf des Sicherheitsgurtes, von einem zur Bereitstellung eines höheren Komforts bevorzugt etwas ergonomischer eingestellten Führung des Sicherheitsgurtes mit einem vergleichsweise höheren oberen Gurtumlenkpunkt eingestellten Verlauf, in einen zur erhöhten Krafteinleitung durch den Sicherheitsgurt in einen Lehnenrahmen vorteilhafteren, tiefer gelegenen effektiven Gurtverankerungspunkt überführt werden. Die erfindungsgemäße Lösung eröffnet die Möglichkeit, die hohe Belastbarkeit der Führung des Sicherheitsgurtes im effektiven Gurtverankerungspunkt in vorteilhafter Weise derart zu nutzen, dass der im Crashfall am schwersten belastete Punkt der Führung des Sicherheitsgurtes nicht an einem Hebelarm der Vorrichtung zur Einstellung eines oberen Gurtumlenkpunktes auftritt, sondern im Bereich einer Verbindungstelle der Vorrichtung zum Lehnenrahmen eines Fahrzeugsitzes oder zum Rahmen eines Fahrzeugs. Ferner ergibt sich durch einen tiefer am Lehnenrahmen anordnenbaren effektiven Gurtumlenkpunkt, welcher folglich auch näher an einer Drehachse des Lehnenrahmens liegt, eine vorteilhafte Krafteinleitung in den Lehnenrahmen, welcher im Crashfall eine höhere Stabilität aufweist.

Dadurch, dass das Verstellelement mit einer Gurtblende zusammenwirkend ausgebildet ist, wird in vorteilhafter Weise die Möglichkeit geschaffen, den oberen Gurtumlenkpunkt, insbesondere bei einem Einbau der Vorrichtung in einem Fahrzeugsitz, möglichst nahe zu einem oberen Randbereich eines Fahrzeugsitzes hin anzuordnen.

Ferner kann die Vorrichtung ein Führungselement aufweisen, welches dazu eingerichtet ist, eine Höheneinstellung eines obersten Gurtumlenkpunktes des Sicherheitsgurtes einzustellen und zu sichern, wobei das Führungselement ferner dazu eingerichtet ist, bei Überschreitung einer vorgegebenen Zugbelastung auf den Sicherheitsgurt die Höheneinstellung des obersten Gurtumlenkpunktes freizugeben.

Gemäß einer vorteilhaften Ausgestaltung der Erfindung ist das Führungselement an der Umlenkeinheit angeordnet. Dadurch kann die Umlenkeinheit zusammen mit dem Führungselement in vorteilhafter Weise vergleichsweise platzsparend und in einer modularen Baugruppe produziert werden, was sich in den Eigenschaften des benötigten Bauraumes und/oder des Gewichtes und/oder der Produktionskosten vorteilhaft auswirken kann.

Gemäß einer weiteren vorteilhaften Ausgestaltung der Vorrichtung steht das Führungselement gelenkig mit der Umlenkeinheit in Verbindung. Besonders bevorzugt steht das Führungselement um eine Drehachse drehbar gelagert mit der Umlenkeinheit in Verbindung, wobei die Drehachse abermals bevorzugt möglichst nah an dem Halteabschnitt und/oder dem Führungsabschnitt, insbesondere an einem Übergangsbereich von Führungsabschnitt zum Halteabschnitt, angeordnet ist.

Des Weiteren kann es vorteilhaft vorgesehen sein, dass der Führungsabschnitt der Umlenkeinheit vorzugsweise über eine Drehachse gelenkig mit dem Halteabschnitt der Umlenkeinheit verbunden ist. Hierdurch kann in vorteilhafter Weise die Führung des Sicherheitsgurtes zwischen der Umlenkeinheit und dem eingestellten obersten Gurtumlenkpunkt unterstützt werden, wobei diese beispielsweise zur Schonung des Sicherheitsgurtes und zur Vermeidung einer Führung über enge Krümmungsradien, einen gezielt gekrümmten Verlauf mit einem weiteren Krümmungsradius aufweisen.

Hierbei kann es ferner vorgesehen sein, dass das Führungselement integral mit dem Führungsabschnitt ausgebildet ist. Unter einer "integralen" Ausgestaltung des Führungselements mit dem Führungsabschnitt im Sinne der Erfindung ist gemeint, dass die Funktion des Führungselements, insbesondere der Einstellung des obersten Gurtumlenkpunktes, sowie auch die Funktion des Führungsabschnittes der Umlenkeinheit, der Führung des Sicherheitsgurtes, von dem selben Bauteil bereitgestellt wird. Hierdurch lässt sich der benötigte Raumbedarf zum Einbau der Vorrichtung abermals in vorteilhafter Weise verringern.

Hierbei kann es ferner vorgesehen sein, dass sich das Verstellelement wenigstens abschnittsweise entlang einer Gurtaustrittsöffnung der Gurtblende erstreckt. Vorteilhaft bei dieser Ausgestaltung kann sein, dass das Verstellelement den obersten Gurtumlenkpunkt möglichst nah an der Gurtblende bereitstellt und zudem die Gurtaustrittsöffnung unterhalb des Austrittsbereichs des Sicherheitsgurtes abdeckt, so dass hiermit eine Verletzung durch ein Freiliegen von scharfen Abschlusskanten verhindert wird, oder zumindest das Verletzungsrisiko verringert wird.

Gemäß einer weiteren Ausgestaltung der Vorrichtung mit einem Verstellelement ist das Verstellelement bevorzugt verschiebbar mit der Gurtblende verbunden. Hierdurch wird der Vorteil erreicht, dass eine von der Umlenkeinheit beabstandete Anordnung des Verstellelements ermöglicht wird, wodurch die Umlenkeinheit gegebenenfalls kleiner und platzsparender ausgeführt sein kann.

Die Vorrichtung kann ferner gemäß einer weiteren Ausgestaltung einen dem Verstellelement in seiner Bewegung entlang der Gurtaustrittsöffnung folgender Schieber aufweisen, welcher die Gurtaustrittsöffnung bis auf einen Spalt zur Durchführung des Sicherheitsgurtes verdeckt. Dies schafft den Vorteil, dass die Gurtaustrittsöffnung bis auf einen möglichst geringen Spalt zur Durchführung des Sicherheitsgurtes weitestgehend verschlossen, bzw. abgedeckt ist.

Diese Aufgabe wird weiterhin durch einen erfindungsgemäßen Fahrzeugsitz mit den Merkmalen des Anspruchs 15 gelöst. Ein erfindungsgemäßer Fahrzeugsitz weist eine Sitzfäche und/oder eine Rückenlehne mit einem Lehnenrahmen sowie einer Vorrichtung gemäß der vorhergehenden Beschreibung auf.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: einen Schnitt durch eine Rückenlehne eines Fahrzeugsitzes mit in einer mittleren Position eingestelltem Sicherheitsgurt gemäß einem ersten Ausführungsbeispiel,
- Fig. 2:: einen Schnitt durch die Rückenlehne des Fahrzeugsitzes aus Fig. 1 mit in einer oberen Position eingestelltem Sicherheitsgurt,
- Fig. 3:: einen Schnitt durch die Rückenlehne des Fahrzeugsitzes aus Fig. 1 mit in einer unteren Position eingestelltem Sicherheitsgurt,
- Fig. 4:: einen Schnitt durch eine Rückenlehne eines Fahrzeugsitzes mit in einer mittleren Position eingestelltem Sicherheitsgurt gemäß einem zweiten Ausführungsbeispiel,
- Fig. 5:: einen Schnitt durch die Rückenlehne des Fahrzeugsitzes aus Fig. 4 mit in einer oberen Position eingestelltem Sicherheitsgurt und
- Fig. 6:: einen Schnitt durch die Rückenlehne des Fahrzeugsitzes aus Fig. 4 mit in einer unteren Position eingestelltem Sicherheitsgurt,
- Fig. 7:: einen Schnitt durch eine Rückenlehne eines Fahrzeugsitzes mit in einer mittleren Position eingestelltem Sicherheitsgurt gemäß einem dritten Ausführungsbeispiel,
- Fig. 8:: einen Schnitt durch die Rückenlehne des Fahrzeugsitzes aus Fig. 7 mit in einer oberen Position eingestelltem Sicherheitsgurt und
- Fig. 9:: einen Schnitt durch die Rückenlehne des Fahrzeugsitzes aus Fig. 7 mit in einer unteren Position eingestelltem Sicherheitsgurt.

Eine Rückenlehne eines Fahrzeugsitzes umfasst einen Lehnenrahmen 10 und einen Sicherheitsgurt 60. Der Lehnenrahmen 10 ist dabei von einem Schaumteil 40 umgeben, welches mit einem Bezug überzogen ist.

Die Anordnung des Fahrzeugsitzes innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Der Fahrzeugsitz umfasst ferner ein Sitzteil, welches in Vertikalrichtung weitgehend unterhalb der Rückenlehne angeordnet ist. Die Rückenlehne ist relativ zu dem Sitzteil um eine in Querrichtung verlaufende Schwenkachse zur Einstellung einer gewünschten Lehnenneigung schwenkbar. Die Vertikalrichtung schließt auch einen Winkelbereich relativ zu der Senkrechten ein, innerhalb welchem die Rückenlehne des Fahrzeugsitzes in einer gewöhnlichen Fahrposition einstellbar ist.

Zur Höheneinstellung des Sicherheitsgurtes 60 ist in einem in Vertikalrichtung oberen Bereich des Lehnenrahmens 10 der Rückenlehne eine Umlenkeinheit 15 angebracht, welche einen Halteabschnitt 20 umfasst. Der Halteabschnitt 20 ist dabei fest mit dem Lehnenrahmen 10, also nicht relativ zu diesem beweglich, verbunden. Ferner weist die Umlenkeinheit einen Führungsabschnitt 25 zur Führung des Sicherheitsgurtes 60 auf. Der Halteabschnitt 20 sowie der Führungsabschnitt 25 ist dabei ebenfalls von dem Schaumteil 40 umgeben.

Der Sicherheitsgurt 60 ist von einem nicht dargestellten Gurtautomat, welcher in einem in Vertikalrichtung unteren Bereich der Rückenlehne angeordnet ist, zunächst in Vertikalrichtung nach oben geführt und verläuft dabei in Fahrtrichtung betrachtet weitgehend hinter dem Halteabschnitt 20. In seinem weiteren Verlauf ist der Sicherheitsgurt 60 in Vertikalrichtung über den Halteabschnitt 20 und in Fahrtrichtung nach vorne geführt.

Das Schaumteil 40 weist einen entsprechenden Hohlraum auf, innerhalb welchem der Sicherheitsgurt 60 in Fahrtrichtung nach vorne bis zu dem Bezug geführt ist, wobei der Bezug im Bereich des zuvor beschriebenen Hohlraums im Schaumteil 40 ebenfalls eine Öffnung zur Durchführung des Sicherheitsgurtes 60 aufweist. An dem Bezug ist eine Gurtblende 50 angebracht, welche eine Gurtaustrittsöffnung 55 aufweist, durch welche der Sicherheitsgurt 60 aus dem Schaumteil 40 der Rückenlehne in Fahrtrichtung nach vorne austritt.

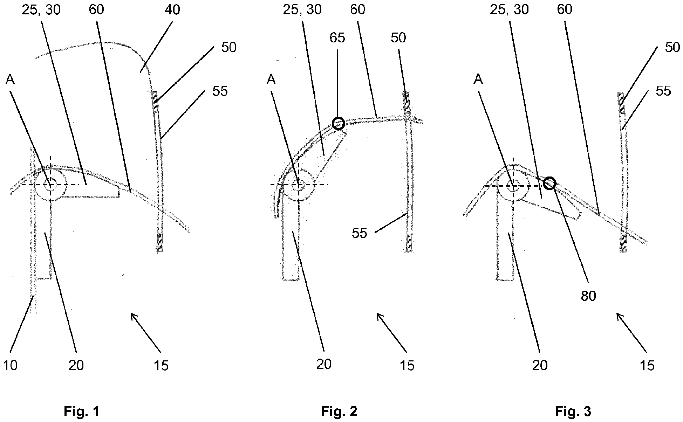

Gemäß eines ersten, in Fig. 1, Fig. 2 und Fig. 3 dargestellten Ausführungsbeispiels weist die Vorrichtung ein Führungselement 30 auf, welches dazu eingerichtet ist, eine Höheneinstellung des Sicherheitsgurtes 60, besonders eines obersten Gurtumlenkpunktes 65, in Relation zur Umlenkeinheit 15 einzustellen und zu sichern. Das Führungselement 30 ist hierbei ferner dazu eingerichtet ist, bei Überschreitung einer vorgegebenen Zugbelastung auf den Sicherheitsgurt 60, welche insbesondere in einem Crashfall auftritt, die Einstellung des Führungselements 30 und die Höheneinstellung des obersten Gurtumlenkpunktes 65 freizugeben, so dass in diesem Fall das Führungselement 30 nicht länger den Verlauf des Sicherheitsgurtes 60 vorgibt.

Anders ausgedrückt, gibt in einer normalen Gebrauchssituation das Führungselement 30 gemäß seiner Einstellung den Verlauf des Sicherheitsgurtes 60 sowie entsprechend die Lage des obersten Gurtumlenkpunktes 65 vor, wohingegen in einer Art Gefahrensituation, insbesondere einem Crashfall oder ähnlichem, der belastete Sicherheitsgurt 60 bei seiner Straffung den für sich günstigsten Verlauf einnimmt und sich das freigegebene Führungselement 30 diesem günstigen Verlauf anpasst.

Wie den Figuren 1 bis 3 weiter entnommen werden kann, ist das Führungselement 30 integral mit dem Führungsabschnitt 25 ausgebildet und gemeinsam mit diesem an der Umlenkeinheit 15 angeordnet. Der Halteabschnitt 20 sowie das Führungselement 30 sind ebenfalls von dem Schaumteil 40 umgeben. Das Führungselement 30 weist eine gewölbte Oberfläche auf und steht gelenkig mit der Umlenkeinheit 15 in Verbindung, bzw. ist relativ zu dem Halteabschnitt 20 um eine Drehachse A drehbar. Die Drehachse A verläuft vorliegend parallel zu der Schwenkachse, um welche die Rückenlehne relativ zu dem Sitzteil schwenkbar ist, also in Querrichtung.

Der Sicherheitsgurt 60 ist in Vertikalrichtung über die gewölbte Oberfläche des Führungselements 30 in Fahrtrichtung nach vorne zu der Gurtaustrittsöffnung 55 der Gurtblende 50 geführt.

Eine Höheneinstellung des Sicherheitsgurtes 60 mittels des Führungselements 30 der Umlenkeinheit 15, insbesondere zur Anpassung an die Körpergröße eines Insassen des Fahrzeugsitzes, erfolgt durch eine Drehung des Führungselements 30 relativ zu dem Halteabschnitt 20 um die Drehachse A.

In Fig. 1 ist das Führungselement 30 annähernd in Fahrtrichtung, also annähernd horizontal eingestellt und der Sicherheitsgurt 60 ist in einer mittleren Position eingestellt.

In Fig. 2 ist das Führungselement 30 relativ zur Fahrtrichtung nach oben geneigt eingestellt und der Sicherheitsgurt 60 ist dadurch in einer oberen Position eingestellt. Hierbei ergibt sich ein oberer Gurtumlenkpunkt 65 im Bereich der Gurtaustrittsöffnung 55 der Gurtblende 50. Das nach oben geneigte Führungselement 30 wirkt gegenüber dem Halteabschnitt 20 der Umlenkeinheit 15 wie ein Hebelarm zwischen der Drehachse A und seiner belasteten Längserstreckung in Fahrtrichtung. In der in Fig. 2 dargestellten möglichen Gebrauchssituation ist dieser Hebelarm jedoch vergleichsweise gering belastet, bzw. der Belastung entsprechend dimensioniert ausgeführt.

In Fig. 3 ist das Führungselement 30 relativ zur Fahrtrichtung nach unten geneigt eingestellt und der Sicherheitsgurt 60 ist dadurch in einer unteren Position eingestellt. Diese Stellung des Führungselements 30 wird beispielsweise in einem Crashfall eingenommen.

Nach, beispielsweise gemäß Fig. 2, erfolgter Höheneinstellung des Sicherheitsgurtes 60 verbleibt das Führungselement 30 in der eingestellten Position. Dazu kann zwischen dem Halteabschnitt 20 und dem Führungselement 30 eine Rasteinrichtung vorgesehen sein, welche mehrere diskrete Raststufen aufweist. Durch Aufbringen eines definierten, verhältnismäßig kleinen Einstellmoments auf das Führungselement 30 ist dieses in eine andere Raststufe drehbar. Auch eine reibschlüssige Verbindung zwischen dem Halteabschnitt 20 und dem Führungselement 30 ist denkbar.

Im Crashfall, wenn der Insasse des Fahrzeugsitzes aufgrund seines Gewichts den Sicherheitsgurt 60 in Fahrtrichtung nach vorne und in Vertikalrichtung nach unten zieht, verursacht der Sicherheitsgurt 60 ein verhältnismäßig großes Moment, welches größer als das Einstellmoment ist, auf das Führungselement 30. Insbesondere erhöht sich hierbei die durch den gestrafften Sicherheitsgurt 60 eingeleitete Belastung auf den Hebelarm des Führungselements 30, so dass die etwaige Rasteinrichtung der Belastung nachgibt und die durch das Führungselement 30 vorgegebene Höheneinstellung freigibt.

Dadurch erfährt das Führungselement 30 eine Drehung nach unten bis zu einer untersten Position. Die in Fig. 3 dargestellte Position des Führungselements 30 und des Sicherheitsgurts 60 entspricht der besagten untersten Position. Ein nicht dargestelltes Blockierelement verhindert eine weitere Drehung des Führungselements 30 um die Drehachse A nach unten.

Das Führungselement 30 folgt der Belastung durch den Sicherheitsgurt 60 weiter und nimmt die dargestellte Neigungsstellung ein. In der untersten Position des Führungselements 30 liegt, wie in Fig. 3 dargestellt, der Sicherheitsgurt 60 teilweise auf der gewölbten Oberfläche des Führungselements 30 auf. Ein Punkt, an welchem der Sicherheitsgurt 60 sich von der Oberfläche des Führungselements 30 entfernt, stellt einen effektiven Gurtverankerungspunkt 80 dar. Die Lage des Gurtverankerungspunkts 80 ist aufgrund der Drehung des Führungselements 30 im Crashfall unabhängig von der zuvor eingestellten Höhe des Sicherheitsgurtes 60.

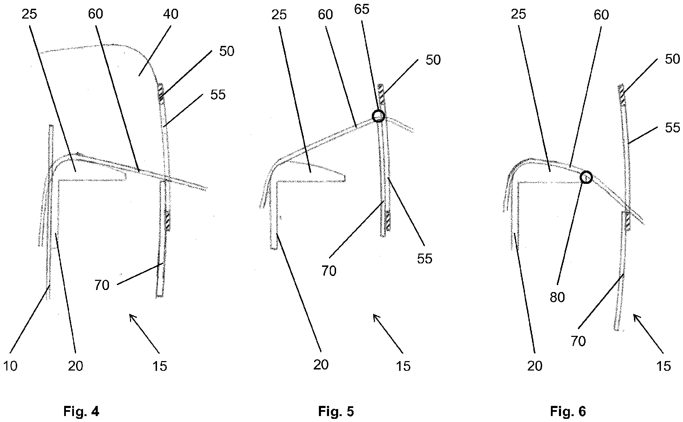

Gemäß eines zweiten, in Fig. 4, Fig. 5 und Fig. 6 dargestellten Ausführungsbeispiels ist an dem Halteabschnitt 20 ein Führungsabschnitt 25 in einer starren, insbesondere nicht beweglichen Verbindung, angebracht, welches ebenfalls von dem Schaumteil 40 umgeben ist. Der Führungsabschnitt 25 weist vorliegend eine gewölbte Oberfläche auf und ist drehfest mit dem Halteabschnitt 20 verbunden. Vorliegend ist der Führungsabschnitt 25 einteilig mit dem Halteabschnitt 20 ausgeführt.

Der Sicherheitsgurt 60 ist in Vertikalrichtung über die Oberfläche des Führungsabschnitts 25 in Fahrtrichtung nach vorne zu der Gurtaustrittsöffnung 55 der Gurtblende 50 geführt.

Die Vorrichtung weist gemäß des dargestellten Ausführungsbeispiels ein Verstellelement 70 auf, welches dazu eingerichtet ist, eine Höheneinstellung eines obersten Gurtumlenkpunktes 65 des Sicherheitsgurtes 60, insbesondere in Relation zur Umlenkeinheit 15, einzustellen und zu sichern. Das Verstellelement 70 ist hierbei besonders dazu eingerichtet, bei Überschreitung einer vorgegebenen Zugbelastung auf den Sicherheitsgurt 60, insbesondere in einem Crashfall, die Höheneinstellung des obersten Gurtumlenkpunktes 65 freizugeben.

Die Gurtblende 50 umfasst ein Verstellelement 70, welches mit einer Gurtblende 50 zusammenwirkend ausgebildet ist und relativ zu der übrigen Gurtblende 50 in Vertikalrichtung verschiebbar ist. Der Sicherheitsgurt 60 liegt an der Oberkante des Verstellelements 70 an. Das Verstellelement 70 erstreckt sich hierbei wenigstens abschnittsweise entlang der Gurtaustrittsöffnung 55 der Gurtblende 50. Weiterhin kann ein dem Verstellelement 70 in seiner Bewegung entlang der Gurtaustrittsöffnung 55 folgender nicht dargestellter Schieber vorgesehen sein, welcher die Gurtaustrittsöffnung 55 bis auf einen Spalt zur Durchführung des Sicherheitsgurtes 60 verdeckt. Der Schieber kann hierbei beispielsweise identisch dem Verstellelement 70 ausgebildet und um eine horizontale Achse, bzw. einer Achse senkrecht zur Ebene des Sicherheitsgurtes 60, gespiegelt angeordnet sein.

Eine Höheneinstellung des Sicherheitsgurtes 60 mittels der Umlenkeinheit 15, insbesondere zur Anpassung an die Körpergröße eines Insassen des Fahrzeugsitzes, erfolgt durch eine Verschiebung des Verstellelements 70 relativ zu der übrigen Gurtblende 50 in Vertikalrichtung. Dabei erfolgt auch eine Verschiebung des Verstellelements 70 relativ zu dem Halteabschnitt 20 in Vertikalrichtung. Der Führungsabschnitt 25 verbleibt dabei in seiner Lage.

In Fig. 4 ist das Verstellelement 70 in Vertikalrichtung in einer mittleren Position eingestellt und somit ist auch der Sicherheitsgurt 60 in einer mittleren Position eingestellt.

In Fig. 5 ist das Verstellelement 70 in Vertikalrichtung in einer oberen Position eingestellt und somit ist auch der Sicherheitsgurt 60 in einer oberen Position eingestellt. Hierbei ergibt sich einer oberer Gurtumlenkpunkt 65 auf der oberen Kante des Verstellelements 70. In der in Fig. 5 dargestellten möglichen Gebrauchssituation ist Verstellement 70 in seiner Verschieberichtung jedoch vergleichsweise gering belastet, bzw. das Verstellelement 70 ist der Belastung entsprechend dimensioniert ausgeführt.

In Fig. 6 ist das Verstellelement 70 in Vertikalrichtung in einer unteren Position eingestellt und somit ist auch der Sicherheitsgurt 60 in einer unteren Position eingestellt. Diese Stellung des Führungselements 30 kann beispielsweise in einem Crashfall eingenommen werden.

Nach erfolgter Höheneinstellung des Sicherheitsgurtes 60 verbleibt das Verstellelement 70 in der eingestellten Position. Dazu umfasst die Gurtblende 50 eine Rasteinrichtung, welche mehrere diskrete Raststufen aufweist. Durch Aufbringen einer definierten, verhältnismäßig kleinen Einstellkraft auf das Verstellelement 70 ist dieses in eine andere Raststufe verschiebbar. Auch eine reibschlüssige Verbindung zwischen dem Verstellelement 70 und der übrigen Gurtblende 50 ist denkbar.

Im Crashfall, wenn der Insasse des Fahrzeugsitzes aufgrund seines Gewichts den Sicherheitsgurt 60 in Fahrtrichtung nach vorne und in Vertikalrichtung nach unten zieht, verursacht der Sicherheitsgurt 60 eine verhältnismäßig große Kraft, welche größer als die Einstellkraft ist, auf das Verstellelement 70. Dadurch erfährt das Verstellelement 70 eine Verschiebung nach unten bis zu einer untersten Position. Die in Fig. 6 dargestellte Position des Verstellelements 70 und des Sicherheitsgurts 60 entspricht der besagten untersten Position. Der Führungsabschnitt 25 verbleibt dabei in seiner Lage.

In der untersten Position des Verstellelements 70 liegt, wie in Fig. 6 dargestellt, der Sicherheitsgurt 60 vollständig auf der Oberfläche des Führungsabschnitts 25 auf. Ein in Fahrtrichtung vorderer Endpunkt der Oberfläche des Führungsabschnitts 25, an welchem der Sicherheitsgurt 60 sich von der Oberfläche des Führungsabschnitts 25 entfernt, stellt einen Gurtverankerungspunkt 80 dar. Der effektive Gurtverankerungspunkt 80 ist aufgrund der Verschiebung des Verstellelements 70 im Crashfall unabhängig von der zuvor eingestellten Höhe des Sicherheitsgurtes 60. Der effektive Gurtverankerungspunkt 80 ist entsprechend der Dimensionierung und Formgestaltung des Führungsabschnitts 25 der Umlenkeinheit 15 auf einen vorgegebenen Bereich einzustellen, bzw. zu positionieren.

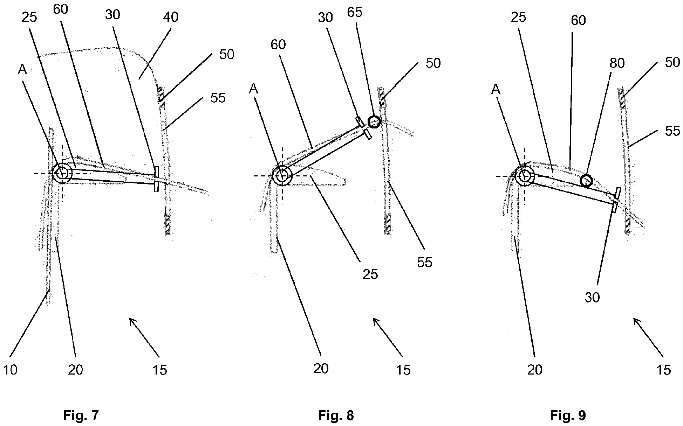

Gemäß eines dritten, in Fig. 7, Fig. 8 und Fig. 9 dargestellten Ausführungsbeispiels ist an dem Halteabschnitt 20 ein Führungsabschnitt 25 in einer starren, insbesondere nicht beweglichen Verbindung, angebracht, welches ebenfalls von dem Schaumteil 40 umgeben ist. Der Führungsabschnitt 25 weist vorliegend eine gewölbte Oberfläche auf und ist drehfest mit dem Halteabschnitt 20 verbunden. Vorliegend ist der Führungsabschnitt 25 einteilig mit dem Halteabschnitt 20 ausgeführt.

Der Sicherheitsgurt 60 ist in Vertikalrichtung über die Oberfläche des Führungsabschnitts 25 in Fahrtrichtung nach vorne zu der Gurtaustrittsöffnung 55 der Gurtblende 50 geführt.

Gemäß dem in den Figuren 7, 8 und 9 gezeigten Ausführungsbeispiel ist das Führungselement 30 an der Umlenkeinheit 15 angeordnet und gelenkig mit der Umlenkeinheit 15 verbunden. Bevorzugt kann das Führungselement 30 hierbei einen mit U-förmigen Verlauf aufweisen, wobei je ein freistehendes Ende den Führungsabschnitt 25 der Umlenkeinheit 15 seitlich gegenüberliegend umgreift und an der Drehachse A gehalten ist.

Eine Höheneinstellung des Sicherheitsgurtes 60 mittels des Führungselements 30 der Umlenkeinheit 15, insbesondere zur Anpassung an die Körpergröße eines Insassen des Fahrzeugsitzes, erfolgt durch eine Drehung des Führungselements 30 relativ zu dem Halteabschnitt 20 um die Drehachse A.

In Fig. 7 ist das Führungselement 30 annähernd in Fahrtrichtung, also annähernd horizontal eingestellt und der Sicherheitsgurt 60 ist in einer mittleren Position eingestellt.

In Fig. 8 ist das Führungselement 30 relativ zur Fahrtrichtung nach oben geneigt eingestellt und der Sicherheitsgurt 60 ist dadurch in einer oberen Position eingestellt. Hierbei ergibt sich ein oberer Gurtumlenkpunkt 65 im Bereich der Gurtaustrittsöffnung 55 der Gurtblende 50. Das nach oben geneigte Führungselement 30 wirkt gegenüber dem Halteabschnitt 20 der Umlenkeinheit 15 wie ein Hebelarm zwischen der Drehachse A und seinem der Drehachse A in Fahrtrichtung gegenüberliegenden, belasteten Abschnitt. In der in Fig. 8 dargestellten möglichen Gebrauchssituation ist dieser Hebelarm jedoch vergleichsweise gering belastet, bzw. der Belastung entsprechend dimensioniert ausgeführt.

In Fig. 9 ist das Führungselement 30 relativ zur Fahrtrichtung nach unten geneigt eingestellt und der Sicherheitsgurt 60 ist dadurch in einer unteren Position eingestellt. Diese Stellung des Führungselements 30 kann beispielsweise in einem Crashfall eingenommen werden.

Im Crashfall verhält sich das Führungselement 30 zunächst wie bei dem ersten Ausführungsbeispiel. Das Führungselement 30 dreht um die Drehachse A bis der Sicherheitsgurt 60 in Kontakt mit dem Führungsabschnitt 25 der Umlenkeinheit 15 gelangt und die Belastung über den effektiven Gurtverankerungspunkt 80 am Führungsabschnitt 25 in die Umlenkeinheit 15 eingeleitet wird.
Hierzu wird hinsichtlich der Wirkweise des Führungselements 30 ausdrücklich auf die Beschreibung der Figuren 1 bis 3 verwiesen, sowie hinsichtlich der Wirkweise des Führungsabschnittes 25 mit dem Gurtverankerungspunkt 80 auf die Beschreibung der Figuren 4 bis 6.

Bei allen Ausführungsbeispielen ist die Lage des Gurtverankerungspunkts 80 des jeweiligen Ausführungsbeispiels also immer konstant und hängt nicht von der zuvor eingestellten Höhe des Sicherheitsgurtes 60 ab.

Insbesondere liegt der Gurtverankerungspunkt 80 in Vertikalrichtung verhältnismäßig tief, also in verhältnismäßig kleinem Abstand zu der Schwenkachse der Rückenlehne. Dadurch ist auch ein Crashmoment, welches der Sicherheitsgurt 60 im Crashfall auf die Rückenlehne überträgt, verhältnismäßig gering. Zusätzliche Verstärkungsmaßnahmen an der Struktur des Fahrzeugsitzes, insbesondere an dem Lehnenrahmen 10 der Rückenlehne, sind somit nicht erforderlich.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Schutzansprüchen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Schutzansprüchen genannten Einheiten bzw. Einrichtungen ausführen.

### Bezugszeichenliste

- 10: Lehnenrahmen
- 15: Umlenkeinheit
- 20: Halteabschnitt
- 25: Führungsabschnitt
- 30: Führungselement
- 40: Schaumteil
- 50: Gurtblende
- 55: Gurtaustrittsöffnung
- 60: Sicherheitsgurt
- 65: oberster Gurtumlenkpunkt
- 70: Verstellelement
- 80: Gurtverankerungspunkt
- A: Drehachse

## Patentansprüche

1. Vorrichtung zur Führung und/oder Umlenkung eines Sicherheitsgurtes (60), mit einer Umlenkeinheit (15), welche einen Halteabschnitt (20) sowie einen Führungsabschnitt (25) aufweist, wobei die Umlenkeinheit (15) mittels dem Halteabschnitt (20) mit einem Lehnenrahmen (10) eines Fahrzeugsitzes fest verbindbar ist, wobei der Sicherheitsgurt über die Umlenkeinheit (15) führbar ist, wobei die Vorrichtung ein Verstellelement (70) aufweist, welches dazu eingerichtet ist, eine Höheneinstellung eines obersten Gurtumlenkpunktes (65) des Sicherheitsgurtes (60) einzustellen und zu sichern,
**dadurch gekennzeichnet, dass** das das Verstellelement (70) ferner dazu eingerichtet ist, bei Überschreitung einer vorgegebenen Zuglastung auf den Sicherheitsgurt (60) die Höheneinstellung des Oberen Gurtumlenkpunktes (65) freizugeben, und dass das Verstellelement (70) mit einer Gurtblende (50) zusammenwirkend ausgebildet ist.

2. Vorrichtung gemäß Anspruch 1,
wobei die Vorrichtung ein Führungselement (30) aufweist, welches dazu eingerichtet ist, eine Höheneinstellung eines obersten Gurtumlenkpunktes (65) des Sicherheitsgurtes (60) einzustellen und zu sichern,
wobei das Führungselement (30) ferner dazu eingerichtet ist, bei Überschreitung einer vorgegebenen Zugbelastung auf den Sicherheitsgurt (60) die Höheneinstellung des obersten Gurtumlenkpunktes (65) freizugeben.

3. Vorrichtung gemäß Anspruch 2,
wobei das Führungselement (30) an der Umlenkeinheit (15) angeordnet ist.

4. Vorrichtung gemäß einem der Ansprüche 2 oder 3,
wobei das Führungselement (30) gelenkig mit der Umlenkeinheit (15) in Verbindung steht.

5. Vorrichtung gemäß einem der Ansprüche 2 bis 4,
wobei der Führungsabschnitt (25) der Umlenkeinheit (15) über eine Drehachse (A) gelenkig mit dem Halteabschnitt (20) der Umlenkeinheit (15) verbunden ist.

6. Vorrichtung gemäß Anspruch 5,
wobei das Führungselement (30) einen U-förmigen Verlauf aufweist und mit je einem freistehenden Ende den Führungsabschnitt (25) der Umlenkeinheit (15) seitlich gegenüberliegend umgreift.

7. Vorrichtung gemäß einem der Ansprüche 5 oder 6,
wobei die Drehachse (A) parallel zu einer Schwenkachse, um welche die Rückenlehne relativ zu einem Sitzteil schwenkbar ist, verläuft.

8. Vorrichtung gemäß einem der Ansprüche 5 bis 7,
wobei die Drehachse (A) im Bereich des Halteabschnitts (20) und/oder des Führungsabschnitts (25) angeordnet ist.

9. Vorrichtung gemäß Anspruch 8,
wobei die Drehachse (A) an einem Übergangsbereich des Führungsabschnitts (25) zum Halteabschnitt (20) angeordnet ist.

10. Vorrichtung gemäß einem der Ansprüche 5 bis 9,
wobei das Führungselement (30) integral mit dem Führungsabschnitt (25) ausgebildet ist.

11. Vorrichtung gemäß einem der Ansprüche 2 bis 10,
wobei der Führungsabschnitt (25) eine gewölbte Oberfläche aufweist.

12. Vorrichtung gemäß einem der Ansprüche 1 bis 11,
wobei sich das Verstellelement (70) wenigstens abschnittsweise entlang einer Gurtaustrittsöffnung (55) der Gurtblende (50) erstreckt.

13. Vorrichtung gemäß einem der Ansprüche 1 bis 12,
wobei das Verstellelement (70) verschiebbar mit der Gurtblende (50) verbunden ist.

14. Vorrichtung gemäß einem der Ansprüche 1 bis 13,
wobei ein dem Verstellelement (70) in seiner Bewegung entlang der Gurtaustrittsöffnung (55) folgender Schieber vorgesehen ist, welcher die Gurtaustrittsöffnung (55) bis auf einen Spalt zur Durchführung des Sicherheitsgurtes (60) verdeckt.

15. Fahrzeugsitz, aufweisend einen Sitzteil und/oder eine Rückenlehne mit einem Lehnenrahmen (10), einem Sicherheitsgurt und einer Vorrichtung gemäß einem der vorhergehenden Ansprüche.

## Claims

1. Device for guiding and/or deflecting a seatbelt (60), with a deflecting unit (15) which has a holding portion (20) and a guide portion (25), wherein the deflecting unit (15) is fixedly connectable to a backrest frame (10) of a vehicle seat by means of the holding portion (20), wherein the seatbelt is guidable via the deflecting unit (15), wherein the device has an adjustment element (70) which is designed to set and to secure a height setting of an uppermost belt deflecting point (65) of the seatbelt (60), **characterized in that** the adjustment element (70) is furthermore designed to release the height setting of the upper belt deflecting point (65) when a predetermined tensile loading on the seatbelt (60) is exceeded, and **in that** the adjustment element (70) is designed in a manner interacting with a belt cover (50).

2. Device according to Claim 1, wherein the device has a guide element (30) which is designed to set and to secure a height setting of an uppermost belt deflecting point (65) of the seatbelt (60), wherein the guide element (30) is furthermore designed to release the height setting of the uppermost belt deflecting point (65) when a predetermined tensile loading on the seatbelt (60) is exceeded.

3. Device according to Claim 2, wherein the guide element (30) is arranged on the deflecting unit (15).

4. Device according to either of Claims 2 and 3, wherein the guide element (30) is connected to the deflecting unit (15) in an articulated manner.

5. Device according to one of Claims 2 to 4, wherein the guide portion (25) of the deflecting unit (15) is connected to the holding portion (20) of the deflecting unit (15) in an articulated manner via a rotational axis (A).

6. Device according to Claim 5, wherein the guide element (30) has a U-shaped profile and, at each free-standing end, engages around the guide portion (25) in a manner lying laterally opposite the deflecting unit (15).

7. Device according to either of Claims 5 and 6, wherein the rotational axis (A) runs parallel to a pivot axis, about which the backrest is pivotable relative to a seat part.

8. Device according to one of Claims 5 to 7, wherein the rotational axis (A) is arranged in the region of the holding portion (20) and/or of the guide portion (25).

9. Device according to Claim 8, wherein the rotational axis (A) is arranged at a transition region of the guide portion (25) to the holding portion (20).

10. Device according to one of Claims 5 to 9, wherein the guide element (30) is formed integrally with the guide portion (25).

11. Device according to one of Claims 2 to 10, wherein the guide portion (25) has a curved surface.

12. Device according to one of Claims 1 to 11, wherein the adjustment element (70) extends at least in sections along a belt outlet opening (55) of the belt cover (50).

13. Device according to one of Claims 1 to 12, wherein the adjustment element (70) is connected displaceably to the belt cover (50).

14. Device according to one of Claims 1 to 13, wherein a slide is provided which follows the movement of the adjustment element (70) along the belt outlet opening (55) and covers the belt outlet opening (55) except for a gap for the passage of the seatbelt (60).

15. Vehicle seat having a seat part and/or a backrest with a backrest frame (10), a seatbelt and a device according to one of the preceding claims.

## Revendications

1. Dispositif de guidage et/ou de renvoi d'une ceinture de sécurité (60), comprenant une unité de renvoi (15) qui présente une portion de retenue (20) ainsi qu'une portion de guidage (25), l'unité de renvoi (15) pouvant être connectée fixement au moyen de la portion de retenue (20) à un cadre de dossier (10) d'un siège de véhicule, la ceinture de sécurité pouvant être guidée par le biais de l'unité de renvoi (15), le dispositif présentant un élément de réglage (70) qui est prévu pour ajuster et fixer un ajustement en hauteur d'un point de renvoi supérieur de ceinture (65) de la ceinture de sécurité (60),
**caractérisé en ce que**
l'élément de réglage (70) est en outre prévu, en cas de dépassement d'une charge de traction prédéfinie sur la ceinture de sécurité (60), pour libérer l'ajustement en hauteur du point de renvoi supérieur de ceinture (65), et
**en ce que** l'élément de réglage (70) est réalisé de manière à coopérer avec un bandeau de ceinture (50).

2. Dispositif selon la revendication 1, dans lequel le dispositif présente un élément de guidage (30) qui est prévu pour ajuster et fixer un ajustement en hauteur d'un point de renvoi supérieur de ceinture (65) de la ceinture de sécurité (60), l'élément de guidage (30) étant en outre prévu, en cas de dépassement d'une charge de traction prédéfinie sur la ceinture de sécurité (60), pour libérer l'ajustement en hauteur du point de renvoi supérieur de ceinture (65).

3. Dispositif selon la revendication 2,
dans lequel l'élément de guidage (30) est disposé sur l'unité de renvoi (15).

4. Dispositif selon l'une quelconque des revendications 2 ou 3,
dans lequel l'élément de guidage (30) est en liaison articulée avec l'unité de renvoi (15).

5. Dispositif selon l'une quelconque des revendications 2 à 4,
dans lequel la portion de guidage (25) de l'unité de renvoi (15) est connectée de manière articulée à la portion de retenue (20) de l'unité de renvoi (15) par le biais d'un axe de rotation (A).

6. Dispositif selon la revendication 5,
dans lequel l'élément de guidage (30) présente une allure en forme de U et vient en prise avec une extrémité libre respective autour de la portion de guidage (25) de l'unité de renvoi (15) latéralement en regard de celle-ci.

7. Dispositif selon l'une quelconque des revendications 5 ou 6,
dans lequel l'axe de rotation (A) s'étend parallèlement à un axe de pivotement autour duquel peut pivoter le dossier par rapport à une partie de siège.

8. Dispositif selon l'une quelconque des revendications 5 à 7,
dans lequel l'axe de rotation (A) est disposé dans la région de la portion de retenue (20) et/ou de la portion de guidage (25).

9. Dispositif selon la revendication 8, dans lequel l'axe de rotation (A) est disposé au niveau d'une région de transition de la portion de guidage (25) à la portion de retenue (20).

10. Dispositif selon l'une quelconque des revendications 5 à 9,
dans lequel l'élément de guidage (30) est réalisé intégralement avec la portion de guidage (25).

11. Dispositif selon l'une quelconque des revendications 2 à 10,
dans lequel la portion de guidage (25) présente une surface courbe.

12. Dispositif selon l'une quelconque des revendications 1 à 11,
dans lequel l'élément de réglage (70) s'étend au moins en partie le long d'une ouverture de sortie de ceinture (55) du bandeau de ceinture (50).

13. Dispositif selon l'une quelconque des revendications 1 à 12,
dans lequel l'élément de réglage (70) est connecté de manière déplaçable au bandeau de ceinture (50).

14. Dispositif selon l'une quelconque des revendications 1 à 13,
dans lequel il est prévu un coulisseau suivant l'élément de réglage (70) sur son déplacement le long de l'ouverture de sortie de ceinture (55), lequel recouvre l'ouverture de sortie de ceinture (55) à l'exception d'une fente pour le passage de la ceinture de sécurité (60).

15. Siège de véhicule, présentant une partie de siège et/ou un dossier de siège avec un cadre de dossier (10), une ceinture de sécurité et un dispositif selon l'une quelconque des revendications précédentes.
